# EUROPÄISCHE PATENTSCHRIFT

(11) **EP 0 944 554 B1**
(45) Veröffentlichungstag und Bekanntmachung des Hinweises auf die Patenterteilung: **11.04.2001**
(21) Anmeldenummer: 97938780.0
(22) Anmeldetag: 19.08.1997
(51) Int. Cl.: C02F 3/08

(54) **VERFAHREN UND VORRICHTUNG ZUR BIOLOGISCHEN ABWASSERREINIGUNG**
PROCESS AND DEVICE FOR THE BIOLOGICAL PURIFICATION OF SEWAGE
PROCEDE ET DISPOSITIF POUR L'EPURATION BIOLOGIQUE DES EAUX D'EGOUTS

(30) Priorität: 21.08.1996 DE 19633629
(43) Veröffentlichungstag der Anmeldung: 29.09.1999
(73) Patentinhaber: Ibero Anlagentechnik GmbH, 63073 Offenbach (DE)
(72) Erfinder: JODELEIT, Wolfgang, D-63128 Dietzenbach (DE)
(74) Vertreter: Schieferdecker, Lutz, Dipl.-Ing.
(86) Internationale Anmeldenummer: DE9701773
(87) Internationale Veröffentlichungsnummer: WO9807663

(56) Entgegenhaltungen:
- WO-A-93/22244
- DE-A- 3 905 753
- DE-A- 19 603 690
- PATENT ABSTRACTS OF JAPAN vol. 5, no. 152 (C-73) [824] , 25.September 1981 & JP 56 084691 A (NISHIHARA KANKIYOU EISEI KENKYUSHO KK), 10.Juli 1981,
- PATENT ABSTRACTS OF JAPAN vol. 8, no. 118 (C-226) [1555] , 31.Mai 1984 & JP 59 032994 A (INA SEITOU KK), 22.Februar 1984,
- PATENT ABSTRACTS OF JAPAN vol. 8, no. 118 (C-226) [1555] , 31.Mai 1984 & JP 59 032995 A (INA SEITOU KK), 22.Februar 1984,
- PATENT ABSTRACTS OF JAPAN vol. 8, no. 193 (C-241) [1630] , 5.September 1984 & JP 59 087095 A (INA SEITOU KK), 19.Mai 1984,

## Beschreibung

Die Erfindung betrifft ein Verfahren und eine Vorrichtung gemäß den Oberbegriffen der Ansprüche 1 und 8 zur biologischen Abwasserreinigung von kommunalen und/oder industriellen Abwässern mit Hilfe von Mikroorganismen enthaltender Biomasse.

Es ist bekannt, Abwässer in Kläranlagen zu reinigen, wobei neben dem in den natürlichen Kreislauf zurückgegebenen, nur noch geringfügig belasteten Wasser in großen Mengen Klärschlamm anfällt. Dieser Klärschlamm besteht aus Abbauprodukten sowie aktiver und inaktiver Biomasse.

Grundsätzlich kann man die Mikroorganismen in zwei Gruppen unterteilen, nämlich in die der suspendierten und in die der sessilen Mikroorganismen. Der Unterschied zwischen beiden Gruppen besteht darin, daß die suspendierten Mikroorganismen mit einer relativ geringen Generationszeit in der sie umgebenden, Abwasser und Biomasse enthaltenden Flüssigkeit schwimmen oder schweben, und die sessilen Mikroorganismen, die eine längere Generationszeit aufweisen, sich bevorzugt auf angebotenen, festen Flächen ansiedeln.

Bei dem Reinigungsvorgang werden die Inhaltsstoffe des Abwassers durch die Mikroorganismen abgebaut, das heißt unter Aufbau von neuer Biomasse oxidiert. Der zur Oxidation erforderliche Sauerstoff muß der Flüssigkeit von außen zugeführt werden.

Während bei dem Reinigungsvorgang ein Teil der suspendierten Organismen ständig als Klärschlamm aus der Flüssigkeit entfernt werden muß, bleiben die sessilen Organismen wesentlich länger erhalten, bis auch sie als inaktive Biomasse ausgespült werden. Dadurch sind diese Organismen in der Lage, sich zu adaptieren und auch schwer abbaubare Stoffe zu entfernen, wie sie zum Beispiel in industriellem Abwasser oder in Deponiesickerwasser enthalten sind.

Die Klärung von Abwässern erfolgt sowohl in relativ großen Kläranlagen als auch in kleinen, mindestens ein Tauchrad aufweisenden Anlagen. Mit der Verwendung von Tauchrädern wird bezweckt, die sehr hohen Herstellungs- und Betriebskosten der Kläranlagen zu senken, wobei dennoch ausreichend Sauerstoff in die Klärflüssigkeit und Biomasse gelangt (vgl. Z.B. JP-A-59 032 994).

Der Erfindung liegt die Aufgabe zugrunde, Maßnahmen vorzusehen, um den Wirkungsgrad der bekannten Verfahren zur biologischen Abwasserreinigung und der zu seiner Durchführung erforderlichen Vorrichtungen zu verbessern.

Zur Lösung dieser Aufgabe sieht die Erfindung die Merkmale im kennzeichnenden Teil des Anspruches 1 vor.

Gemäß der Erfindung wird Luftsauerstoff in Form von Umgebungsluft von dem Tauchrad aufgenommen und derart in sein Inneres eingeleitet und dort derart geführt, daß sich ein rotierendes Gemisch bildet, das mindestens aus Mikroorganismen enthaltender Biomasse, aus Abwasser bzw. Klärflüssigkeit und Sauerstoff enthaltender Umgebungsluft in Form von Luftblasen besteht, die eingefangen sind und mit dem Gemisch in dem Tauchrad zirkulieren. Die Verweilzeit des Sauerstoffes im Inneren des Tauchrades ist gegenüber bekannten Verfahren deutlich verbessert, so daß eine sehr gute Sauerstoffausnutzung möglich ist. Ein besonders inniger Kontakt der Mikroorganismen mit dem Sauerstoff ist aufgrund von dessen langer Verweilzeit gewährleistet und erhöht daher den Wirkungsgrad der Vorrichtung, womit zugleich eine Senkung der Betriebskosten verbunden ist.

Gemäß einer bevorzugten Ausführungsform zirkuliert die Strömung im Inneren des Tauchrades entgegen dessen Drehrichtung. Erreicht wird dies durch die Anordnung der die Umgebungsluft bzw. das Gemisch führenden Einbauten im Tauchrad, das sich selbst ebenfalls permanent mit geringer Geschwindigkeit dreht.

Eine weitere Erhöhung des Wirkungsgrades wird erfindungsgemäß dann erreicht, wenn auch frei bewegliche Träger/ Füllkörper als Aufwuchskörper für die sessilen Mikroorganismen unterhalb des Flüssigkeitsspiegels sowie innerhalb der perlenden Luft im Tauchrad angeordnet werden und das Abwasser-Biomasse-Gemisch zusammen mit den Trägern permanent bewegt wird.

Die permanente Bewegung und Durchmischung des Abwasser-Biomasse-Gemisches stellt sicher, daß sich die als Aufwuchskörper dienenden Träger mit ihren Mikroorganismen nicht an definierten Stellen festsetzen. Somit ist eine gleichmäßige Verteilung in dem Gemisch gewährleistet.

Gemäß einer bevorzugten Ausführungsform sind als Aufwuchskörper dienende Träger/ Füllkörper auch außerhalb des Tauchrades in der das Tauchrad aufnehmenden Flüssigkeit angeordnet.

Weitere Merkmale der Erfindung gehen aus Unteransprüchen im Zusammenhang mit der Beschreibung und der Zeichnung hervor.

Die Erfindung wird nachstehend anhand von Ausführungsbeispielen, die in der Zeichnung dargestellt sind, näher beschrieben. Dabei zeigen:
- Fig. 1:: eine schematische Darstellung eines Tauchrades;
- Fig. 2:: eine Ansicht längs der Linie II-II in Fig. 1;
- Fig. 3:: in größerem Maßstab eine Ansicht einer Segmentkammer;
- Fig. 4:: eine perspektivische Darstellung eines ersten, als Aufwuchskörper dienenden Trägers in größerem Maßstab;
- Fig. 5:: eine Ansicht wie in Fig. 4. von einem abgewandelten Träger;
- Fig. 6:: eine Ansicht wie in den Fig. 4 und 5 von einem dritten Träger;
- Fig. 7:: eine Ansicht wie in Fig. 1 mit wesentlichen Merkmalen eines abgewandelten Tauchrades;
- Fig. 8:: einen Schnitt längs der Linie VIII-VIII in Fig. 7;
- Fig. 9:: eine Ansicht wie in den Fig. 1 und 7 von einem dritten Ausführungsbeispiel eines Tauchrades;
- Fig. 10:: eine Ansicht des Tauchrades gemäß Fig. 9 in einer anderen Stellung;
- Fig. 11:: einen Schnitt längs der Linie XI-XI in Fig. 9;
- Fig. 12:: eine Ansicht eines Tauchrades ähnlich dem in Fig. 9 dargestellten Tauchrad zusammen mit Aufwuchskörpern/ Füllkörpern außerhalb des Tauchrades und
- Fig. 13:: eine Ansicht wie in den Fig. 1, 7 und 9 von einem vierten Ausführungsbeispiel eines Tauchrades.

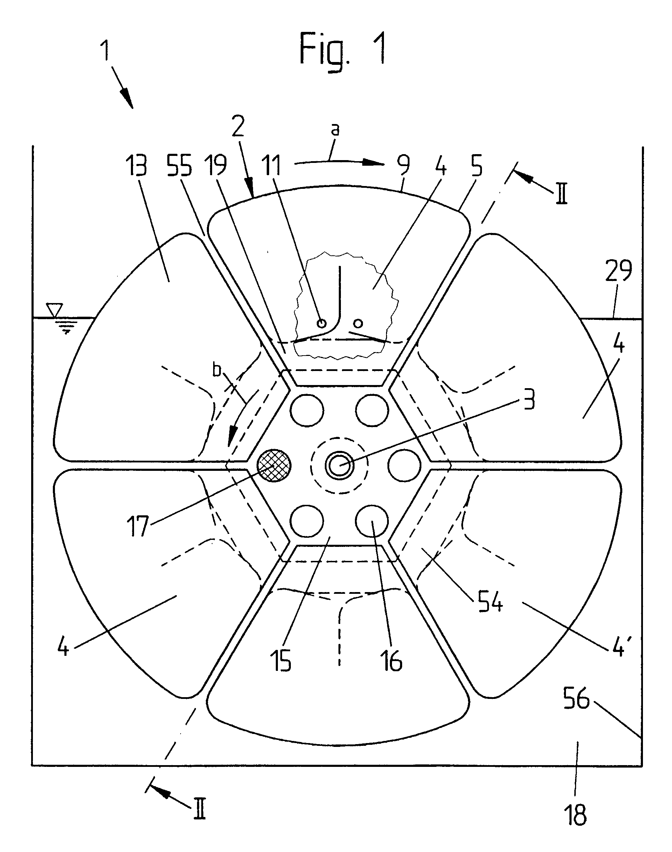

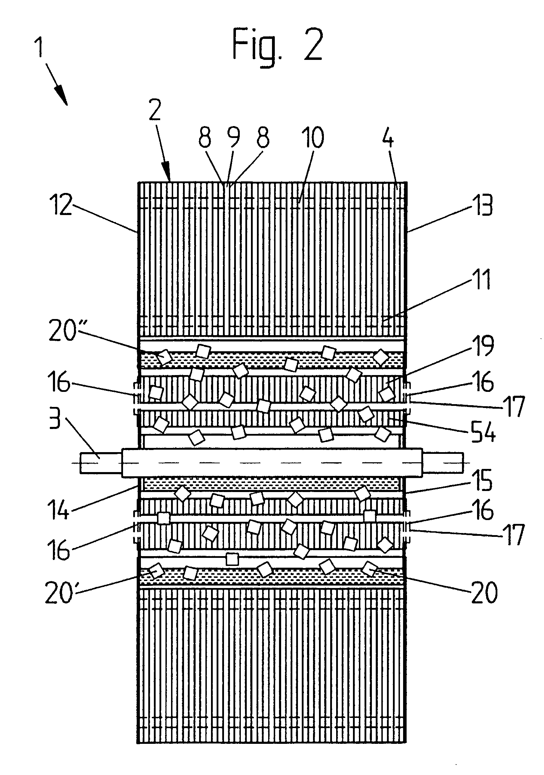

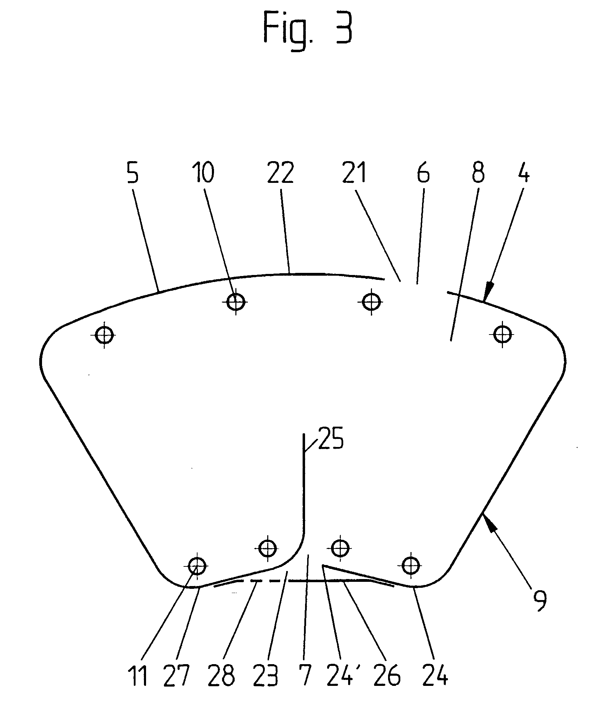

Gemäß dem in den Fig. 1 und 2 dargestellten Ausführungsbeispiel umfaßt eine Vorrichtung 1 zur biologischen Abwasserreinigung ein Tauchrad 2 mit einer angetriebenen, tragenden Welle 3 und mit Reaktionskammern 4 in Gestalt von Segmentkammern. Die Reaktionskammern 4 befinden sich am Umfang des Tauchrades 2 und weisen radial nach außen gerichtete Luftdurchtrittsöffnungen 6 und radial nach innen gerichtete Luftdurchtrittsöffnungen 7 auf. Die außenliegenden Luftdurchtrittsöffnungen 6 sind, wie Fig. 3 in Verbindung mit Fig. 1 deutlich erkennen läßt, in Drehrichtung des Tauchrades 2 vorauseilend angeordnet.

Gebildet werden die segmentförmigen Reaktionskammern 4 mit Hilfe von im Abstand zueinander stehenden, profilierten Platten 8 und Randstegen 9, die den Abstand der Platten 8 voneinander definieren und ihren Umfang begrenzen. Gehalten sind die Platten 8 mit Hilfe von Tragestangen 10, 11, die wiederum mit ihren Enden an axial außen befindlichen Trageplatten 12, 13 befestigt sind.

Zwischen den Trageplatten 12, 13 und der Welle befinden sich jeweils stirnseitig plattenförmige, als axiale Verschlußwände dienende Verschlußstücke 14, 15, an denen die Trageplatten 12 und 13 angeschweißt oder in sonstiger Weise befestigt sind. Die Verschlußstücke 14 und 15 weisen jeweils mindestens eine, vorzugsweise jedoch mehrere kleine Öffnungen 16 auf. In diesen Öffnungen 16 angeordnete Siebe (Siebbleche) 17 gestatten einen Austausch von zu klärendem Abwasser und Biomasse aus einem Raum 18 außerhalb des Tauchrades und seinem die Welle 3 umgebenden Inneren 19. Dieses Innere 19 ist eine außen etwa zylindrische oder polygonförmige Ringkammer und reicht von der Welle 3 bis zu den radial innen liegenden Teilen der Randstege 9 der segmentförmigen Reaktionskammern 4.

In dem Inneren 19 bzw. der Innenkammer des Trägers 2 befinden sich lose sowie nicht miteinander verbundene, frei bewegliche, als Aufwuchskörper für sessile Mikroorganismen dienende Träger 20/ Füllkörper in großer Zahl. Entsprechend der Bewegung des Abwasser-Biomasse-Gemisches bewegen sich auch die Träger 20 im Inneren 19 des Tauchrades 2. Sie gelangen dabei kontinuierlich von einer unteren Lage entsprechend dem Träger 20' bis in eine obere Lage entsprechend dem Träger 20" in Fig. 2 und kommen dabei mit Luftblasen in Berührung, die aus den Reaktionskammern 4 während der Drehung des Tauchrades in sein Inneres 19 austreten.

Zur Versorgung des Inneren der Reaktionskammern 4 und des die Welle 3 umgebenden, im Querschnitt polygonförmigen oder etwa zylindrischen Inneren 19 des Tauchrades 2 mit Sauerstoff dienen die Luftdurchtrittsöffnungen 6 und 7 in den Reaktionskammern 4.

Die radial außen befindliche Luftdurchtrittsöffnung 6 einer jeden Reaktionskammer 4 wird von einer Lücke 21 gebildet, die sich in einem Teil 22 des Randsteges 9 befindet, der den außen liegenden Umfang 5 des Tauchrades 2 bildet (Fig. 3). Die innen liegende Luftdurchtrittsöffnung 7 wird ebenfalls von einer Lücke 23 des Randsteges 9 gebildet. Diese Lücke 23 befindet sich in einem radial innen liegenden, sich in Umfangsrichtung erstreckenden Teil 24 des Randsteges 9. Die Lücke 23 wird einerseits begrenzt von einem freien Ende 24' des Teiles 24. und von einem die Reaktionskammer 4 in radialer Richtung mittig von innen nach außen teilenden Zwischenstück 25. Der Randsteg 9 und seine Teile 22, 24 bzw. auch das Zwischenstück 25 sind Begrenzungswände mit einer sehr geringen axialen Erstreckung, so daß das Tauchrad 2 in axialer Richtung eine große Anzahl Reaktionskammern 4 aufweist.

Von dem Teil 24 des Randsteges 9 erstreckt sich ferner ein Leitkörper 26 in Gestalt eines Leitbleches zu einem zweiten, ebenfalls radial innen befindlichen Teil 27 des Randsteges 9 auf der anderen Seite des Zwischenstückes 25, wie aus Fig. 3 hervorgeht. Der Leitkörper 26 ist teilweise ununterbrochen und somit dicht und teilweise ist er durchbrochen bzw. siebförmig. Die durch die Luftdurchtrittsöffnung 7 in das Innere 19 des Tauchrades 2 gelangende Luft durchströmt auch den siebförmigen Teil des Leitkörpers 26, wobei der nicht durchbrochene Teil des Leitkörpers 26 zur Führung des Abwasser-Biomasse-Gemisches und der sich in diesem befindlichen Träger 20 dient.

Wenn sich das Tauchrad 2 in Fig. 1 in Richtung des Pfeiles a dreht, bewegt sich das im zentrischen Inneren 19 des Tauchrades 2 befindliche Abwasser-Biomasse-Gemisch relativ dazu in entgegengesetzter Drehrichtung entsprechend dem Pfeil b. Dabei bewegt sich das Gemisch zunächst längs des Leitkörpers 26 und gelangt dann in den siebförmigen Bereich 28, durch den die Luft in das Abwasser-Biomasse-Gemisch ausperlt, wenn sich die Reaktionskammer 4 etwa in der Position 4' in Fig. 1 befindet. Die Reaktionskammern 4 nehmen Umgebungsluft nur dann auf, wenn sie über den Flüssigkeitsspiegel 29 auftauchen, um sie dann wieder beim Abtauchen allmählich abzugeben. Wenn sich die Reaktionskammern 4 beim Auftauchen jeweils mit Luft füllen, strömt Flüssigkeit durch die Öffnung 7 bzw. durch den siebförmigen Bereich 28 des Leitkörpers 26.

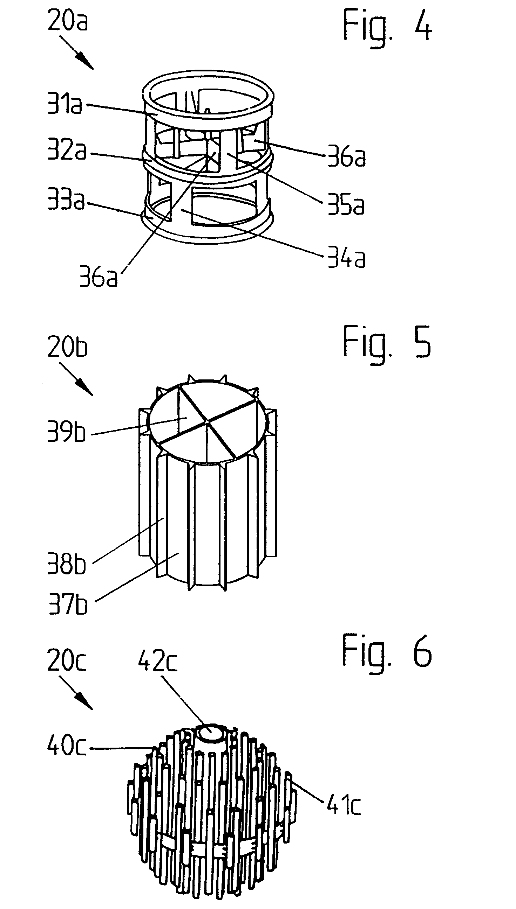

Die Träger 20 besitzen eine Größe etwa wie ein Fingerhut und können entsprechend den jeweiligen Anforderungen unterschiedlich groß bzw. auch unterschiedlich gestaltet sein. Drei verschiedene Ausführungsformen sind in den Fig. 4 bis 6 perspektivisch dargestellt, wobei für grundsätzlich gleiche Teile dieselben Bezugszahlen und zusätzlich jeweils ein unterscheidender Buchstabenindex vorgesehen sind.

Der Träger 20a gemäß Fig. 4 ist im wesentlichen zylindrisch. Er besteht aus Ringen 31a, 32a und 33a, die über Stege 34a und 35a miteinander verbunden sind. Die Ringe 31a, 32a und 33a sind parallel, im Abstand voneinander sowie co-axial zueinander angeordnet. Darüber hinaus sind auch zentrisch angeordnete, sich kreuzende Stege 36a vorgesehen. Zusammen ergeben die Ringe und die Stege eine insgesamt große Oberfläche, auf der sich die sessilen Mikroorganismen ansiedeln können.

Der Durchmesser der Ringe 31a, 32a und 33a ist etwa gleich groß wie die axiale Länge des Trägers 20a.

Bei dem in Fig. 5 dargestellten Ausführungsbeispiel handelt es sich um einen Träger 20b, der ebenfalls zylindrisch ist und etwa gleichen Durchmesser und axiale Länge besitzt. Er besteht im wesentlichen aus einem Rohrstück 37b mit nach außen gerichteten, achsparallelen Rippen 38b und mit nach innen gerichteten, sich kreuzenden Stegen 39b.

Der in Fig. 6 dargestellte Träger 20c besitzt eine etwa kugelförmige Kontur 40c und besteht aus parallel zueinander sowie im Abstand voneinander angeordneten Stäben 41c.

Die Länge der Stäbe 41c ist zur Erzielung der kugelförmigen Kontur 40c unter-schiedlich. Im Zentrum ist ein Rohr 42c anstelle von einem oder mehreren Stäben 41c vorgesehen.

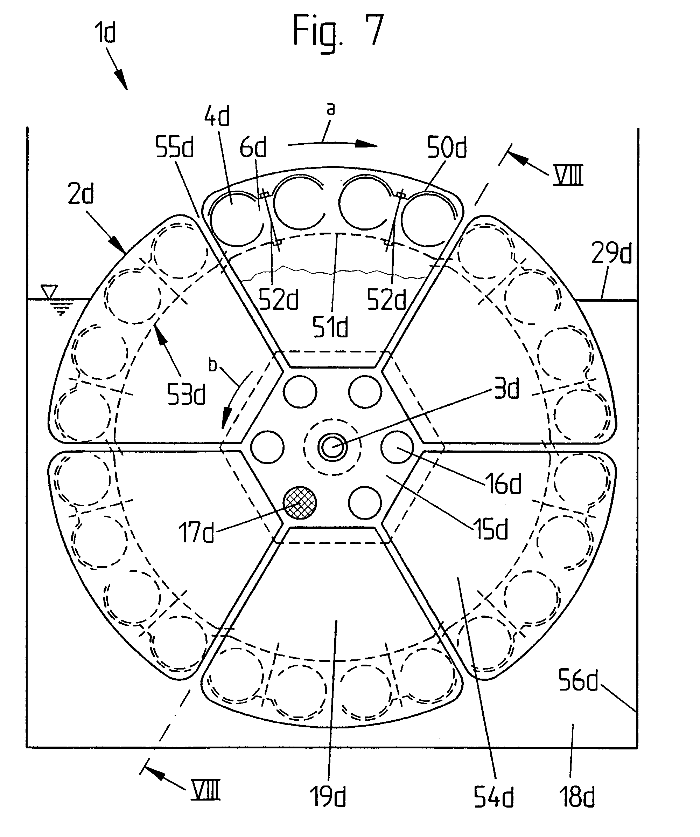

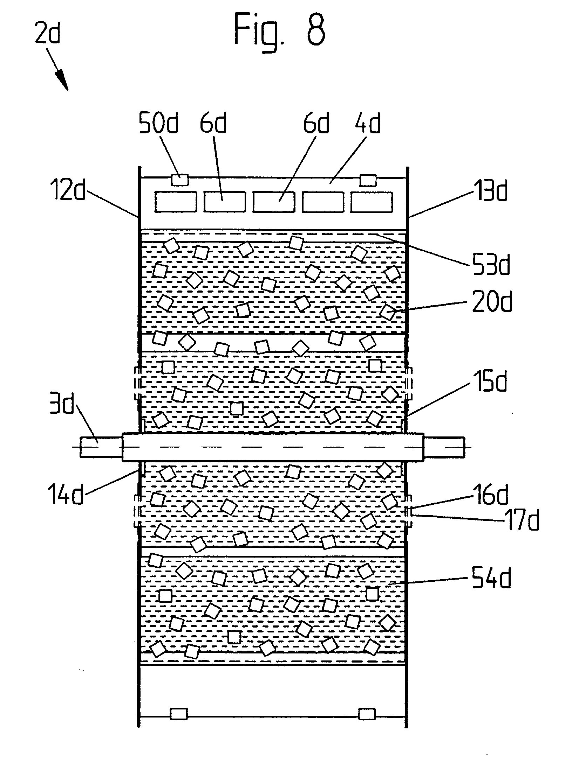

Die beiden Fig. 7 und 8 betreffen eine abgewandelte Vorrichtung 1d, wobei auch hier dieselben Bezugszahlen für gleiche Teile wie im Falle der Vorrichtung 1 und zusätzlich der Buchstabenindex d vorgesehen sind.

Die Vorrichtung 1d weist am Umfang des Tauchrades 2d als Reaktionskammern 4d und/oder nur als Luft- und Flüssigkeits-Transporteinrichtung dienende Kammern auf. Diese Kammern sind gemäß Ausführungsbeispiel jeweils Rohre mit Zwichenwänden für ihre Funktion als Reaktionskammern und mit auf einem gemeinsamen Radius liegenden, seitlich in Umfangsrichtung weisenden Öffnungen 6d. Über und unter dem Flüssigkeitsspiegel 29d nehmen sie jeweils zunächst Umgebungsluft auf und geben diese dann wieder ab. Dazu sind, wie Fig. 8 zeigt, in achsparalleler Lage mehrere Öffnungen 6d vorgesehen. Bei der Abgabe von Luft füllen sich die rohrförmigen Kammern 4d jeweils mit Flüssigkeit und geben diese ebenfalls ab, wenn sie über den Flüssigkeitsspiegel 29 d auftauchen.

Zur Lagerung und Befestigung der Rohre 4d dienen Halteklammern 50d und zugleich als axiale Begrenzung des Tauchrades 2d vorgesehene Trageplatten 12d und 13d. Hinsichtlich ihrer Form und Gestalt stellen die Trageplatten 12d und 13d - wie im übrigen auch die Trageplatten 12 und 13 der Vorrichtung 1 - Außenteile von Sektorelementen dar, die radial innen - bei den Ausführungsbeispielen nach den Fig. 1 und 7 - mit sechseckigen sowie plattenförmigen, als Verschlußwänden dienenden Verschlußstücken 14d bzw. 15d verbunden sind. Die Verschlußstücke 14d und 15d sind wiederum drehfest mit der Welle 3d verbunden.

An den Halteklammern 50d sind ferner Siebbleche 51d mit Hilfe von Schrauben 52d befestigt. Bezogen auf das Tauchrad 2d befinden sich die Siebbleche 51d radial innerhalb der Rohre 4d. Diese Siebbleche 51d sind bogenförmig und bilden zusammen einen Ring 53d. Das Innere 19d des Ringes 53d stellt eine zylindrische Kammer 54d dar, durch die sich die Welle 3d erstreckt. Die Kammer 54d dient nicht nur zur Aufnahme des Abwasser-Biomasse-Gemisches, sondern zweckmäßigerweise auch zur Aufnahme von Trägern 20d (Fig. 8) für die sessilen Mikroorganismen. Der aus Siebblechen 51d gebildete Ring 53d verhindert dabei, daß die Träger 20d radial nach außen in den Bereich der rohrförmigen Reaktionskammer 4d entweichen können.

In axialer Richtung wird die zylindrische Kammer 54d von den teilweise segmentförmigen Trageplatten 12d und 13d bzw. von den Verschlußstücken 14d und 15d begrenzt, wobei die Verschlußstücke 14d und 15d wiederum Öffnungen 16d für das Abwasser-Biomasse-Gemisch und in den Öffnungen 16d zum Zurückhalten der Träger 20d jeweils siebförmige Bleche 17d aufweisen.

Ebenso wie für das Tauchrad 2 gemäß Fig. 1 gilt für das Tauchrad 2d gemäß Fig. 7, daß die das Innere 19 bzw. 19d bildende, zentrale Innenkammer an beiden Stirnseiten mindestens fast vollständig geschlossen ist. Dazu dienen die gemäß den Ausführungsbeispielen jeweils polygonförmigen/ sechseckigen sowie plattenförmigen Verschlußstücke 14 und 15 bzw. 14d und 15d. Darüber hinaus können aber auch die jeweils zwischen den Reaktionskammern 4 bzw. 4d befindlichen Schlitze 55 bzw. 55d über ihre gesamte Länge oder wenigstens teilweise geschlossen sein. Dies erhöht nicht nur die Steifigkeit des Tauchrades 2, 2d, sondern beeinflußt auch die Strömungsverhältnisse innerhalb und außerhalb des Tauchrades 2, 2d.

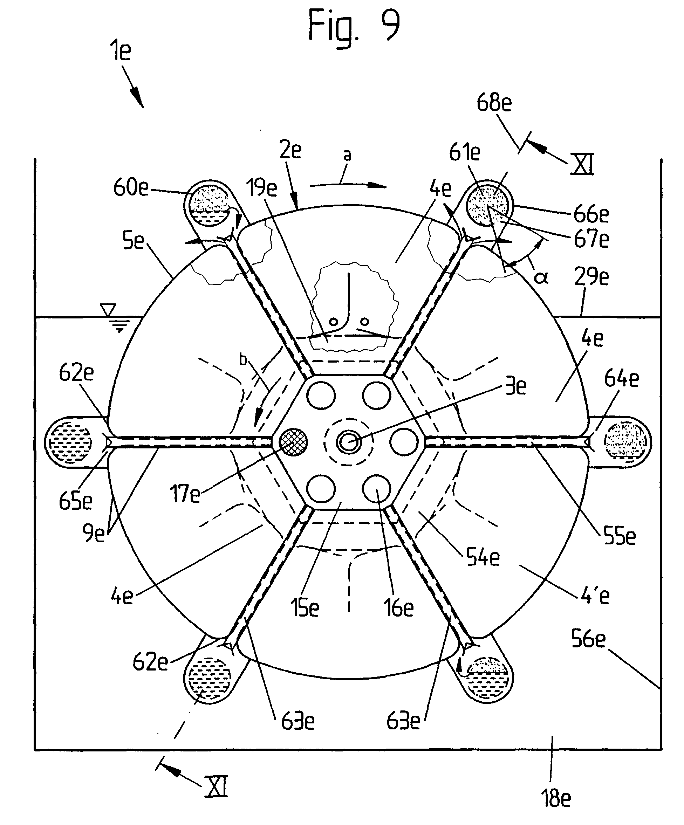

Ein weiteres Ausführungsbeispiel von einer Vorrichtung 1e mit einem Tauchrad 2e ist in den Figuren 9 bis 11 dargestellt, wobei wiederum grundsätzlich gleiche Teile dieselben Bezugszahlen und zusätzlich den Buchstabenindex e aufweisen.

Der Sauerstoffeintrag des Tauchrades 2 gemäß Fig. 1 kann weiter erhöht werden, wenn zusätzliche Schöpfkammern 60e für Umgebungsluft am Umfang 5e des Tauchrades 2e vorgesehen und ferner Maßnahmen derart angeordnet sind, daß die von diesen Schöpfkammern 60e oberhalb des Flüssigkeitsspiegels 29e aufgenommene Umgebungsluft 61e so weit wie möglich in das Innere 19e des Tauchrades 2e beim Abtauchen abgegeben wird. Dazu sind die Schöpfkammern 60e jeweils radial außen über den Enden 62e der zwischen benachbarten Reaktionskammern 4e befindlichen Schlitze 55e angeordnet. Die Schlitze 55e reichen vom Umfang 5e des Tauchrades 2e bis in dessen Inneres 19e und sind an beiden Stirnseiten des Tauchrades 2e mit Hilfe von Abdeckleisten 63e verschlossen.

Die Kontur der Reaktionskammern 4e bzw. der zu ihrer Bildung dienenden Abstands- und Randstege 9e ist zu beiden Seiten der Schlitze 55e symmetrisch gleich (Fig. 1 bzw. 9). Am äußeren, freien Ende 62e der Schlitze 55e sind Leitelemente 64e in geringem Abstand von den außen liegenden Eintrittsöffnungen 65e der Schlitze 55e angeordnet. Gemäß Ausführungsbeispiel sind diese Leitelemente 64e symmetrisch und besitzen die Form von Winkeln. Mit ihrer Spitze sind sie in das Innere der Schlitze 55e gerichtet.

Radial außerhalb von den im Querschnitt zweckmäßigerweise winkelförmigen Leitelementen 64e sind die Schöpfkammern 60e angeordnet, bei denen es sich gemäß Ausführungsbeispiel um Rohre handelt.

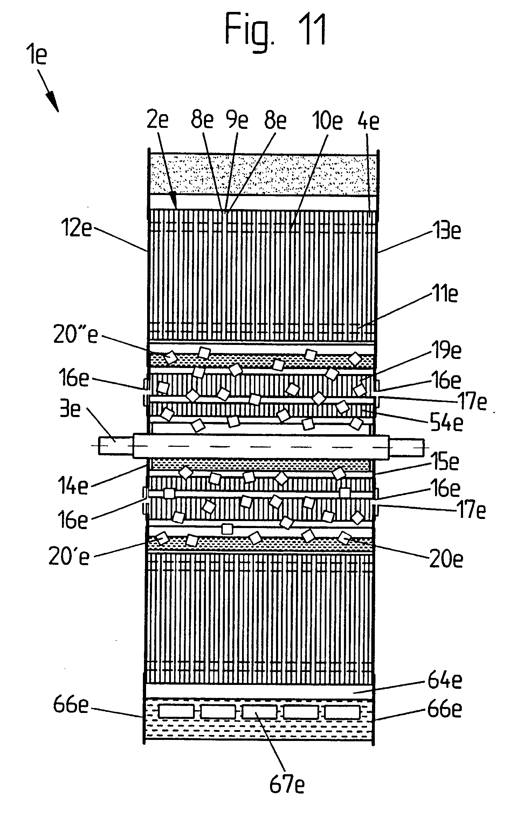

Die rohrförmigen Schöpfkammern 60e sind mit Hilfe von Bügeln 66e am Umfang 5e des Tauchrades 2e befestigt. Sie weisen mindestens eine Öffnung 67e zum Ein- und Austritt von Umgebungsluft auf. Über die Länge der rohrfömigen Schöpfkammern 60e sind zweckmäßigerweise gemäß Fig. 11 mehrere Öffnungen 67e vorgesehen. Alle Öffnungen 67e sind in einer Lage schräg zum Umfang 5e des Tauchrades 2e angeordnet und in Drehrichtung offen. Bezogen auf eine radiale Ebene 68e des Tauchrades 2e öffnen sich die Öffnungen 67e in den Schöpfkammern 60e unter einem Winkel, der in der Größenordnung von 30° bis 60° liegen kann. Es versteht sich allerdings, daß die Anpassungen der Öffnungen 67e jeweils an die besonderen Abmessungen eines Tauchrades 2e erfolgen muß und daher nicht auf die genannten Werte beschränkt ist.

Auf einem Tauchrad 2e mit sechs Reaktionskammern 4e können 6 rohrförmige Schöpfkammern 60e angebracht werden, wie dies in den Fig. 9 bis 11 dargestellt ist. Die Schöpfkammern 60e nehmen bei jeder Drehung des Tauchrades 2e analog der Funktion nach den zuerst beschriebenen Ausführungsbeispielen Umgebungsluft auf und geben diese in dem Flüssigkeitsgemisch wieder ab. Die unterhalb des Flüssigkeitsspiegels 29e ausperlende Luft wird durch die spaltförmigen Schlitze 55e in das als Innenkammer ausgebildete Innere 19e des Tauchrades 2e eingeleitet.

Mit dieser Strömungsführung der aufgenommenen Umgebungsluft wird nach dem Prinzip der Mammutpumpe zusätzlich gezielt Abwasser und suspendierte Biomasse aus dem Bodenbereich bzw. Raum 18e des Behälters 56e in das Tauchrad 2e gepumpt und in die dort gegenläufig rotierende Walze aus Abwasser, Biomasse und Luftblasen sowie gegebenenfalls Füllkörpern 20 eingespeist. Dabei unterstützen die in dem trichterförmigen, äußeren Teil der Schlitze angeordneten Profilleisten bzw. Leitelementen 64e das Einfangen und die Einleitung der Luftblasen, wie dies auch anhand von Pfeilen dargestelt ist. Entsprechend der Abgabe der Umgebungsluft aus den Schöpfkammern 60e in das Innere 19e des sich langsam drehenden Tauchrades 2e füllen sich die Schöpfkammern 60e mit Abwasser und suspendierter Biomasse aus dem Bodenbereich des Behälters 56e.

Nach dem Auftauchen der Schöpfkammern 60e über dem Flüssigkeitsspiegel 29e fließt der Inhalt der Schöpfkammern 60e über die Schlitze 55e ebenfalls in das Innere 19e des Tauchrades 2e. Dieses Gemisch wird von der dort befindlichen, zirkulierenden bzw. walzenförmigen Strömung erfaßt und eingemischt.

Die als Profilleisten dienenden Winkelprofile bzw. Leitelemente 64e besitzen eine doppelte Funktion sowohl als Leitelemente für die Umgebungsluft bei deren Übergang von den Schöpfkammern 60e in das Innere 19e des Tauchrades 2e als auch bei der Abgabe von Flüssigkeit aus den Schöpfkammern 60e in das Innere 19e des Tauchrades 2e.

Ein Teil der im Inneren 19e des Tauchrades 2e befindlichen überschüssigen Luft wird im Gegenstrom zu der einfließenden Flüssigkeit nach außen abgegeben. Auch hierdurch ist ein guter Sauerstoffübergang in die Flüssigkeit gewährleistet. Jeweils einer der sechs Schlitze 55e gemäß Ausführungsbeispiel befindet sich in einer solchen Position, daß verbrauchte Luft ungehindert an die Atmosphäre abgegeben werden kann.

Durch die Gestaltung des Tauchrades 2e und mit Hilfe frei beweglicher Träger /Füllkörper 20e mit fixierter Biomasse sind ideale Voraussetzungen für die Nitrifikation des in den meisten Abwässern enthaltenen Ammoniumstickstoffes (NH₄) gegeben, da sich Nitrifikanten bevorzugt auf angebotenen Flächen ansiedeln.

Durch die geschlossene Bauweise des Tauchrades 2 bzw. 2e gemäß den Fig. 1 und 9 und durch die Strömungsführung von Luft, Abwasser und suspendierter Biomasse ist es in besonderer Weise möglich, eine gezielte Nitrifikation und eine gezielte Denitrifikation, d.h. die Umwandlung des gebildeten Nitrates in gasförmigen Stickstoff in einem Becken gleichzeitig durchzuführen, da sich bei entsprechendem Flüssigkeitsvolumen außerhalb des Tauchrades von selbst eine Zone mit sehr geringem Sauerstoffgehalt - eine anoxische Zone - einstellt, wie dies für die Denitrifikation erforderlich ist.

Durch ständige Messung des Sauerstofgehaltes in der anoxischen Zone (Raum 18e außerhalb des Tauchrades 2e) und Regelung der Drehzahl des Tauchrades 2e ist eine Automatisierung des Prozesses möglich.

Unabhängig von der Drehzahlregelung besteht ferner die Möglichkeit, durch teilweises Verschließen der Öffnungen 16e und teilweises Öffnen der Abdeckleisten 63e den Flüssigkeitsaustauch zwischen dem Inneren 19e des Tauchrades und dem Flüssigkeitsgemisch außerhalb des Tauchrades 2e je nach den Anforderungen gezielt zu verändern und einzustellen.

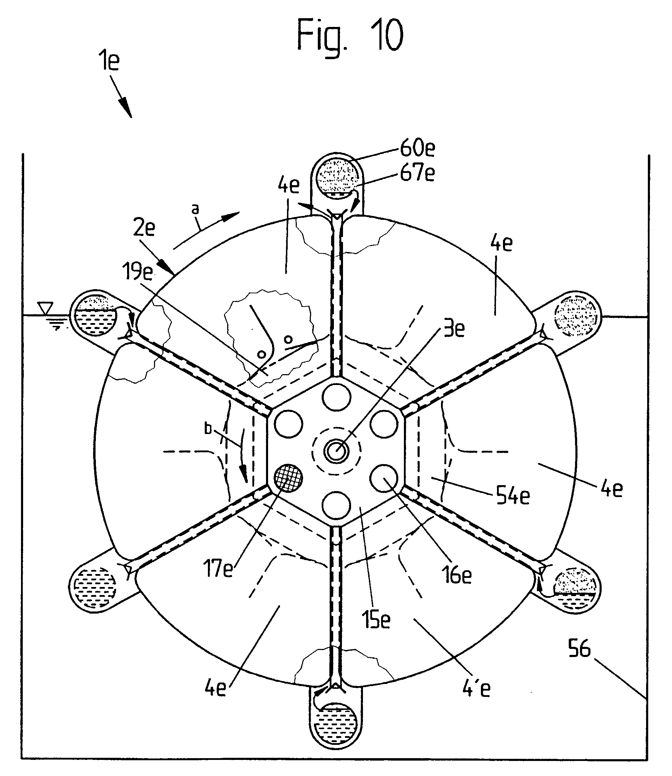

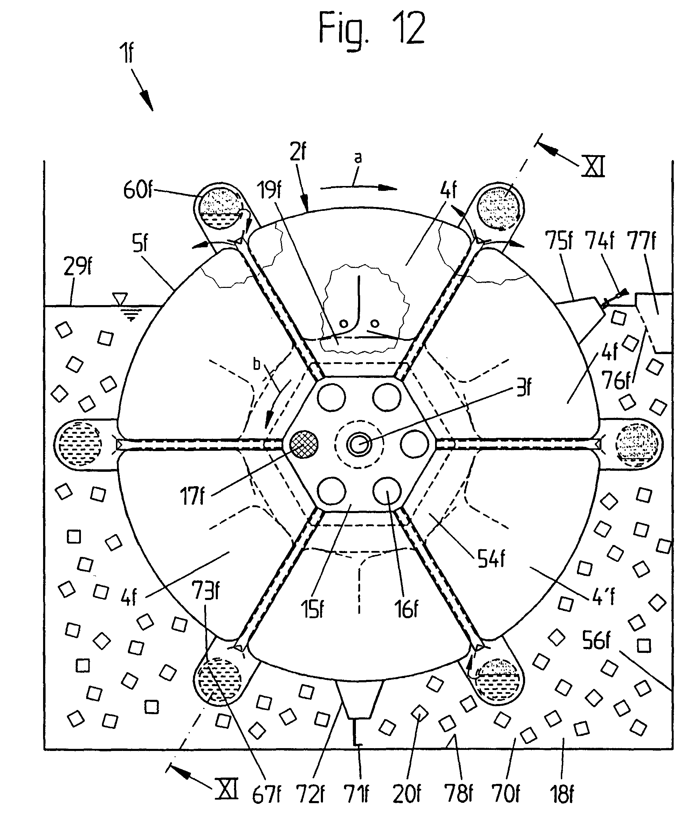

Während Fig. 10 lediglich eine andere Stellung des Tauchrades 2e in dem Biomasse enthaltenden Flüssigkeitsgemisch zeigt und anhand von Pfeilen erkennen läßt, in welcher Weise Umgebungsluft aus den Schöpfkammern 60e in das Innere 19e des Tauchrades 2e ausperlt und von den Schöpfkammern 60e aufgenommenes Gemisch beim Auftauchen zumindest in erheblichem Umfang durch die Schlitze 55e ebenfalls in das Innere 19e des Tauchrades 2e fließt, zeigt Fig. 11 das Tauchrad 2e mit in seinem Inneren 19e angeordneten Trägern 20e bzw. Füllkörpern 20e für sessile Mikroorganismen. Diese Träger 20e müssen aber nicht nur im Inneren 19e des Tauchrades 2e angeordnet sein, sondern sie können gemäß dem in Fig. 12 dargestellten Ausführungsbeispiel sich auch in dem das Tauchrad 2f umgebenden Flüssigkeitsgemisch 70f befinden.

Die in Fig. 12 dargestellte Vorrichtung 1f mit dem Tauchrad 2f stimmt weitgehend mit der Vorrichtung 1e mit dem Tauchrad 2e gemäß den Fig. 9 bis 11 überein. Identisch gleiche Teile weisen daher dieselben Bezugszahlen und zusätzlich den unterscheidenden Buchstabenindex f auf.

Die hohe Übereinstimmung des Tauchrades 2f mit dem Tauchrad 2e ergibt sich grundsätzlich bereits aufgrund der Schnittlinie XI-XI in Fig. 12. Alle Teile des Tauchrades 2e sind daher auch bei dem Tauchrad 2f vorhanden.

Zusätzlich weist das Tauchrad 2f an seinem Umfang mindestens ein Paddel 71f auf. Dieses Paddel 71f kann ein Winkeleisen sein, das mit Hilfe von Bügeln 72f am Umfang 5f des Tauchrades 2f befestigt ist. Das bzw. die Paddel 71f dienen zum zusätzlichen Durchmischen des in dem das Tauchrad 2f aufnehmenden Behälter 56f befindlichen Flüssigkeitsgemisches 70f, in dem sich gemäß Ausführungsbeispiel zusätzlich die Träger bzw. Füllkörper 20f für sessile Mikroorganismen befinden. Auch am Boden des Behälters 56f befindliche Masse wird daher aufgewirbelt und gelangt durch die nicht nur zur Aufnahme von Umgebungsluft, sondern auch zum Aufnehmen von Flüssigkeit dienenden Schöpfkammern 60f in das Innere 19f des Tauchrades 2. Allerdings ist mit Hilfe von Siebblechen 73f an den Öffnungen 67f sichergestellt, daß die außerhalb des Tauchrades 2 befindlichen Träger bzw. Füllkörper 20f nicht aufgenommen werden und in dem Raum 18f außerhalb des Tauchrades 2f bleiben. Ferner ist mindestens eine Bürsteinrichtung 74f mit Hilfe von Bügeln 75f am Umfang 5f des Tauchrades 2f befestigt. Die Bürsteinrichtung 74f ist so ausgeführt, daß sie bei jeder Umdrehung einmal an einem Auslauf 77f des Behälters 56f angeordnete, gebogene Siebbleche 76f freibürstet bzw. ein Belegen des Siebes verhindert.

Zweckmäßigerweise wird der Raum 18f zwischen den Stirnseiten des Tauchrades 2f und den Behälterwänden nur so groß ausgeführt, daß ein Transport der Aufwuchskörper/ Füllkörper 20f in diesem Raum 18f gewährleistet ist. Das bzw. die Paddel 71f und die Bürsteinrichtung 74f sind so ausgeführt, daß zwischen Paddel bzw. Bürsteinrichtung einerseits und äußerem Durchmesser des Tauchrades 2f andererseits sowie zwischen Paddel 71f bzw. Bürsteinrichtung 74f einerseits und dem Boden 78f des Behälters 56f andererseits ein definierter Abstand besteht.

Durch das hohe Sauerstoffeintragvermögen der Vorrichtung 1f gemäß Fig. 12 ist gewährleistet, daß sowohl die Füllkörper 20f innerhalb des Tauchrades 2 f als auch außerhalb des Tauchrades 2f ausreichend mit Sauerstoff versorgt werden. Durch die Drehung des Tauchrades 2f entstehen Wirbel hinter dem/den Paddeln 71f und der Bürsteinrichtung 74f, die ein Absetzen der Füllkörper 20f ausschließen und zusammen mit den rohrförmigen Schöpfkammern 60f den Transport sowie die ständige Durchmischung von Abwasser, suspendierter Biomasse sowie den Füllkörpern 20f mit der fixierten Biomasse sicherstellen.

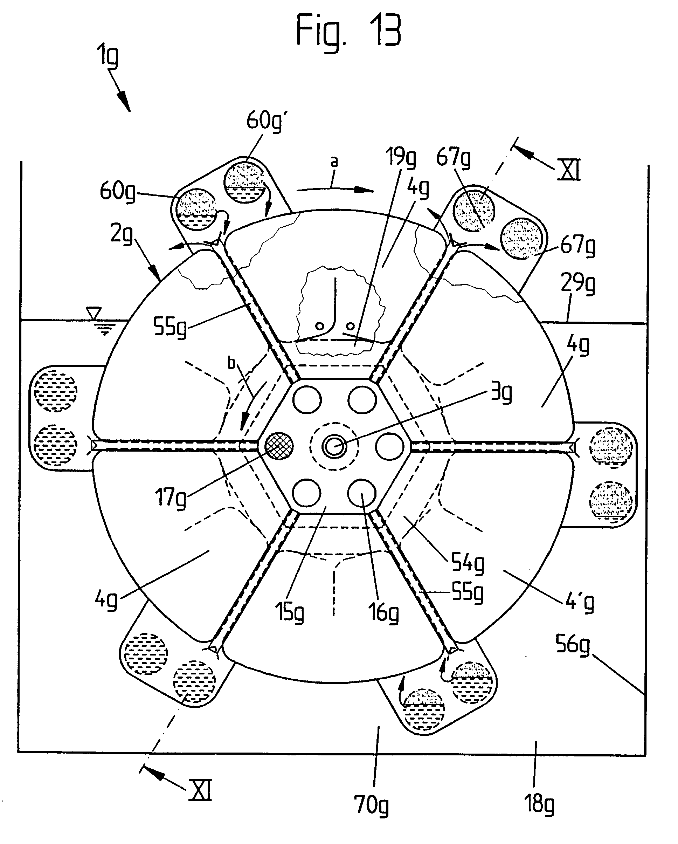

Ein letztes Ausführungsbeispiel von einer Vorrichtung 1g mit einem Tauchrad 2g ist in Fig. 13 dargestellt, wobei dort grundsätzlich gleiche Teile wiederum dieselben Bezugszahlen und ferner den Buchstabenindex g aufweisen.

Das Tauchrad 2g ist im Bereich eines jeden Spaltes bzw. Schlitzes 55g nicht nur mit einer Schöpfkammer 60g, sondern mit zwei Schöpfkammern 60g' und entsprechend mit zwei Öffnungen 67g ausgestattet. Die jeweils eine Schöpfkammer 60g befindet sich wiederum in radialer Verlängerung der Schlitze 55g, während die zweite Schöpfkammer 60g' auf demselben Radius unmittelbar neben der ersten Schöpfkammer 60g in Drehrichtung vorauseilend angeordnet ist.

Beide Schöpfkammern 60g und 60g' sind wiederum zweckmäßigerweise rohrförmig und weisen über ihre Länge mehrere Öffnungen 67g auf. Die Lage dieser Öffnungen 67g ist derart gewählt, daß die Schöpfkammern 60g, 60g' nach dem Auftauchen bzw. beim Abtauchen in optimaler Weise zunächst Umgebungsluft aufnehmen und dann bei der Abgabe der Umgebungsluft in die Schlitze 55g sich mit dem Flüssigkeitsgemisch 70g aus dem Raum 18g außerhalb des Tauchrades 2g füllen und dieses Flüssigkeitsgemisch dann wieder beim Auftauchen über die Schlitze 55g an das Innere 19g des Tauchrades 2g abgeben.

Durch die Tandemanordnung von Schöpfkammern 60g, 60g' bei jedem Schlitz 55g kann die doppelte Luftmenge sowie eine größere Menge von dem Flüssigkeitsgemisch 70g im Behälter 56g in das Innere 19g des Tauchrades 2g eingeleitet werden.

Es versteht sich schließlich, daß je Schlitz 55g auch noch mehr als zwei Schöpfkammern 60g bzw. 60g' vorgesehen sein können und daß die Größe und das Volumen der Schöpfkammern sowie die Größe und Lage der Öffnungen 67g entsprechend den Abmessungen des Tauchrades 2g variieren können und nicht auf das in den Figuren dargestellte Ausführungsbeispiel beschränkt sind.

Durch die etwa tangential gerichtete Lage der als Leiteinrichtung dienenden Teile 24, 26, 27 und 28 (Fig. 3) entsteht im Inneren des Tauchrades 2 eine gegenläufig zu seiner Drehrichtung rotierende, walzenförmige Strömung, in der eine intensive Durchmischung von Sauerstoff aus der Umgebungsluft, Abwasser, Biomasse (suspendierter) und den Füllkörpern mit ihrer fixierten Biomasse stattfindet. Aufgrund der Durchmischung werden ständig neue Grenzflächen für den Sauerstoffübergang gebildet. Dabei werden in dieser Strömung Luftblasen derart mitgeführt, daß diese kurz vor Erreichen der Flüssigkeitsoberfläche aus einer Zone niedrigen Druckes entgegen ihrer natürlichen Aufsatzbewegung wieder nach unten in eine Zone höheren Druckes transportiert werden. Hiermit verbunden ist eine besonders gute Sauerstoffausnutzung, insbesondere da durch Erhöhnung des Partialdruckes auch der Sauerstoffübergang erhöht wird. Wesentlich ist auch, daß keine zusätzliche Energiezufuhr zur Ausbildung dieser Strömung im Inneren 19 des Tauchrades 2 erforderlich ist.

Die abwärts gerichtete Strömung im Tauchrad 2 wird zwar durch die eingebauten Leitbleche/ Leitkörper erzeugt, hinzu kommt aber noch, daß als Antrieb für die walzenförmige Strömung auch die aus den unter Wasser befindlichen Reaktionskammern in das Innere 19 des Tauchrades ausperlende Luft beiträgt. Sie erzeugt eine aufwärts gerichtete Dichteströmung. Auch durch die zusätzlich vorgesehenen Schöpfkammern 60e wird Flüssigkeit unter dem Flüssigkeitsspiegel 29e durch ausperlende Luft über die Schlitze 55e in das Innere 19e des Tauchrades 2e gepumpt. Ferner fließt Flüssigkeit aus den jeweils auftauchenden Reaktionskammern in das Innere des Tauchrades, wobei diese Flüssigkeit durch die Leitbleche tangential in die walzenförmige Strömung eingeleitet wird. Die aus den Schlitzen stammende Flüsssigkeit verstärkt die walzenförmige Strömung wegen der Dichteunterunterschiede, da die Flüssigkeit dort weniger Luftblasen enthält und somit nach unten absinkt. Die in das Innere des Tauchrades einströmende Flüssigkeit dient daher als Antrieb für die insgesamt walzenförmig rotierende Strömung.

Sehr wesentlich ist schließlich, daß das Innere 19 des Tauchrades 2 stirnseitig geschlossen bzw. nahezu geschlossen ist. Dazu befinden sich Siebe 17 in allen grundsätzlich vorgesehenen Öffnungen 16, um einen Flüssigkeitsaustausch zwischen dem Inneren 19 des Tauchrades 2 und außerhalb des Tauchrades gezielt zu erreichen bzw. zu verändern oder einzustellen. Hierzu können auch die Abdeckleisten 63e (Fig. 9) einstellbar sein.

Die Erfindung ist nicht auf die in den Figuren dargestellten Ausführungsbeispiele beschränkt. Entscheidend ist, daß durch gezielte Maßnahmen erreicht wird, daß große bis mittelgroße Luftblasen während des Durchperlens - auch mit Hilfe von den Trägern 20/ Aufwuchskörpern - zerteilt werden, so daß eine besonders große Gesamtblasenoberfläche entsteht. Sie bewirkt einen verbesserten Sauerstoffüberübergang. Durch die induzierte, gegenläufige Rotationsbebewegung der Flüssigkeit mit Trägern 20 im Innern 19 des Tauchrades 2 werden die Luftblasen bei ihrer natürlichen Aufwärtsbewegung behindert und wieder nach unten befördert. Dadurch werden die Kontaktzeit und der Sauerstoffausnutzungsgrad entscheidend erhöht. Auch der Widerstand bei der Durchperlung der bewegten Träger 20 erhöht die Kontaktzeit. Ein besonders guter Wirkungsgrad ist daher die Folge.

## Patentansprüche

1. Verfahren zur biologischen Abwasserreinigung mit Hilfe von aktiver Biomasse in Form von suspendierten und/oder sessilen Mikroorganismen und mit Hilfen von aus der Umgebungsluft stammendem Sauerstoff unter Verwendung eines Tauchrades (2), das eine im Inneren (19) mittig angeordnete Kammer mit einer Welle (3) sowie radial außen und axial nebeneinander Reaktionskammern (4) aufweist und Sauerstoff aus der Umgebungsluft in ein bewegtes, aus Klärflüssigkeit und Biomasse bestehendes Gemisch fördert
dadurch gekennzeichnet, daß die Umgebungsluft unter Verwendung von mindestens einem Leitelement (24, 26, 27, 28) derart in das Innere (19) des Tauchrades (2) eingeleitet und dort derart geführt wird, daß mindestens ein Teil des aus Mikroorganismen enthaltender Biomasse, aus Abwasser bzw. Klärflüssigkeit und aus Umgebungsluft bestehenden Gemisches zusammen mit der Umgebungsluft in Form von eingefangenen Luftblasen sich als relativ zum Tauchrad (2) rotierende, zirkulierende Strömung bewegt.

2. Verfahren nach Anspruch 1, dadurch gekennzeichnet, daß sich die Strömung walzenförmig und/oder annähernd walzenförmig entgegen der Drehrichtung des Tauchrades (2) bewegt.

3. Verfahren nach mindestens einem der vorhergehenden Ansprüche, dadurch gekennzeichnet, daß Umgebungsluft vom Umfang (5e) des Tauchrades (2e) radial in das Innere (19e) des Tauchrades (2e) eingeleitet wird.

4. Verfahren nach mindestens einem der vorhergehenden Ansprüche, dadurch gekennzeichnet, daß das aus Klärflüssigkeit und Biomasse bestehende Gemisch durch radial gerichtete Schlitze (55e) in das Innere (19) des Tauchrades (2e) eingeleitet wird.

5. Verfahren nach mindestens einem der vorhergehenden Ansprüche, dadurch gekennzeichnet, daß als Träger (20) für sessile Mikroorganismen dienende Aufwuchskörper sich frei im Inneren (19) des Tauchrades (2) und/oder außerhalb des Tauchrades (2f) bewegen.

6. Verfahren nach mindestens einem der vorhergehenden Ansprüche, dadurch gekennzeichnet, daß mit der Umgebungsluft zugleich auch Flüssigkeit aus dem das Tauchrad (2) aufnehmenden Raum (18) derart in das Innnere (19) des Tauchrades eingeleitet und dort derart geführt wird, daß sich eine relativ zum Tauchrad (2) rotierende Strömung bewegt.

7. Verfahren nach mindestens einem der vorhergehenden Ansprüche, gekennzeichnet durch Rahmenbedingungen für eine Nitrifikation innerhalb des Tauchrades (2) und für eine Denitrifikatin außerhalb des Tauchrades (2).

8. Vorrichtung zur biologischen Abwasserreinigung mit Hilfe von suspendierten und/oder sessilen Mikroorganismen in Form eines Tauchrades (2), dadurch gekennzeichnet, daß das Tauchrad (2) stirnseitig im Bereich seines Inneren (19) / Innenkammer plattenförmige Verschlußstücke (14, 15) an beiden Stirnseiten zum Verschließen seines Inneren (19) vorgesehen sind und daß mindestens eine Öffnung (16) vorgesehen ist und daß als Leiteinrichtung dienende Teile (24, 26, 27, 28) derart vorgesehen sind, daß sich im Inneren des Tauchrades (2) eine zirkulierende Strömung einstellt.

9. Vorrichtung nach mindestens einem der vorhergehenden Vorrichtungsansprüche, dadurch gekennzeichnet, daß frei bewegliche Träger (20, 20d, 20f) für sessile Mikroorganismen im Inneren (19) des Tauchrades (2) und/oder außerhalb des Tauchrades (2f) angeordnet sind.

10. Vorrichtung nach mindestens einem der vorhergehenden Vorrichtungsansprüche, dadurch gekennzeichnet, daß Schöpfkammern (60e) für Umgebungsluft und/oder Flüssigkeit derart vorgesehen sind, daß sie ihren Inhalt mindestens zum Teil unmittelbar radial in das Innere (19e) des Tauchrades (2e) abgeben.

11. Vorrichtung nach mindestens einem der vorhergehenden Vorrichtungsansprüche, dadurch gekennzeichnet, daß radial gerichtete Schlitze (55) zwischen den Reaktionskammern (4) angeordnet sind und den Umfang des Tauchrades (2) mit seinem Inneren (19) verbinden.

12. Vorrichtung nach mindestens einem der vorhergehenden Vorrichtungsansprüche, gekennzeichnet durch Einrichtungen zur Schaffung von Rahmenbedingungen derart, daß eine Nitrifikation innerhalb des Tauchrades (2) und eine Denitrifikation außerhalb des Tauchrades (2) durchführbar sind.

13. Vorrichtung zur biologischen Abwasserreinigung mit Hilfe eines Tauchrades (2d), das eine im Inneren (19d) mittig angeordnete Kammer mit einer Welle (3d) und weitgehend geschlossene Stirnseiten aufweist, dadurch gekennzeichnet, daß als Reaktionskammern (4d) und/oder als Schöpfkammern für Umgebungsluft / Flüssigkeit dienende Kammern radial außerhalb eines das Innere (19d) begrenzenden siebförmigen Ringes (53d) angeordnet sind.

## Claims

1. Method of biological purification of effluents with the assistance of active biomass in the form of suspended and/or sessile micro-organisms and with the assistance of oxygen derived from the ambient air, with use of an immersion wheel (2) which has a chamber, which is centrally arranged in the interior (19), with a shaft (3) as well as radially outward and axially adjacent reaction chambers (4) and which conveys oxygen from the ambient air into a moved mixture consisting of clarified liquid and biomass, characterised in that the ambient air is introduced in such a manner into the interior (19) of the immersion wheel (2) with use of at least one guide element (24, 26, 27, 28) and guided there in such a manner that at least a part of the mixture, which consists of biomass containing micro-organisms, effluents or clarified liquid and ambient air, together with the ambient air in the form of trapped air bubbles moves as a circulating current rotating relative to the immersion wheel (2).

2. Method according to claim 1, characterised in that the current moves in roller-shaped and/or approximately roller-shaped manner opposite to the rotational direction of the immersion wheel (2).

3. Method according to at least one of the preceding claims, characterised in that ambient air is introduced from the circumference (5e) of the immersion wheel (2e) radially into the interior (19e) of the immersion wheel (2e).

4. Method according to at least one of the preceding claims, characterised in that the mixture consisting of clarified liquid and biomass is introduced into the interior (19) of the immersion wheel (2e) through radially directed slots (55e).

5. Method according to at least one of the preceding claims, characterised in that swellable bodies serving as carriers (20) for sessile micro-organisms move freely in the interior (19) of the immersion wheel (2) and/or outside the immersion wheel (2f).

6. Method according to at least one of the preceding claims, characterised in that liquid from the space (18) receiving the immersion wheel (2) is also introduced in such a manner into the interior (19) of the immersion wheel (2e) at the same time as the ambient air and guided there in such a manner that a current rotating relative to the immersion wheel (2) moves.

7. Method according to at least one of the preceding claims, characterised by basic conditions for a nitrification within the immersion wheel (2) and for a dentrification outside the immersion wheel (2).

8. Device for biological purification of effluents with the assistance of suspended and/or sessile micro-organisms, in the form of an immersion wheel (2) which has a chamber, which is centrally arranged in the interior (19), with a shaft (3) as well as radially outward and axially adjacent reaction chambers (4) and which conveys oxygen from the ambient air into a moved mixture consisting of clarified liquid and biomass, characterised in that the immersion wheel (2) has at the end faces and in the region of its interior (19) or inner chamber, plate-shaped closure members (14, 15) at both end faces for closure of its interior (19) and that at least one opening (16) is provided and that parts (24, 26, 27, 28) serving as guide equipment are provided in such a manner that a circulating current sets in in the interior of the immersion wheel (2).

9. Device according to at least one of the preceding claims, characterised in that freely mobile carriers (20, 20d, 20f) for sessile micro-organisms are arranged in the interior (19) of the immersion wheel (2) and/or outside the immersion wheel (2f).

10. Device according to at least one of the preceding claims, characterised in that scoop chambers (60e) for ambient air and/or liquid are provided in such a manner that they deliver their content at least in part directly radially into the interior (19e) of the immersion wheel (2e).

11. Device according to at least one of the preceding claims, characterised in that radially oriented slots (55) are arranged between the reaction chambers (4) and connect the circumference of the immersion wheel (2) with the interior (19) thereof.

12. Device according to at least one of the preceding claims, characterised by devices for creation of basic conditions in such a manner that a nitrification is performable within the immersion wheel (2) and a dentrification is performable outside the immersion wheel (2).

13. Device for biological purification of effluents with the assistance of an immersion wheel (2d) which has a chamber, which is centrally arranged in the interior (19d), with a shaft (3d) and largely closed end faces, characterised in that chambers serving as reaction chambers (4d) and/or as scoop chambers for ambient air/liquid are arranged radially outside a sieve-like ring (53d) bounding the interior (19d).

## Revendications

1. Procédé pour l'épuration biologique des eaux d'égout à l'aide d'une biomasse active sous forme de micro-organismes en suspension et/ou sessiles et à l'aide d'oxygène provenant de l'air ambiant en utilisant une roue plongeuse (2) qui présente une chambre disposée à l'intérieur (19) au milieu avec un arbre (3) ainsi que des chambres de réaction (4) radialement extérieures et axialement les unes à côté des autres et convoie de l'oxygène de l'air environnant dans un mélange agité, constitué de liquide clarifiant et de biomasse,
caractérisé en ce
que l'air environnant, en utilisant au moins un élément conducteur (24, 26, 27, 28) est introduite dans l'intérieur (19) de la roue plongeuse (2) et y est guidé de façon qu'au moins une partie du mélange constitué de biomasse contenant des micro-organismes, des eaux d'égout respectivement du liquide clarifiant et de l'air ambiant se déplace ensemble avec l'air ambiant sous la forme de bulles d'air enfermées comme flux circulant, tournant relativement à la roue plongeuse (2).

2. Procédé selon la revendication 1, caractérisé en ce que le flux se déplace d'une manière cylindrique et/ou approximativement cylindrique contre la direction de rotation de la roue plongeuse (2).

3. Procédé selon au moins l'une des revendications précédentes, caractérisé en ce que l'air ambiant est introduit de la périphérie (5e) de la roue plongeuse (2e) radialement dans l'intérieur (19e) de la roue plongeuse (2e).

4. Procédé selon au moins l'une des revendications précédentes, caractérisé en ce que le mélange constitué de liquide clarifiant et de biomasse est introduit à travers des fentes (55e) orientées radialement dans l'intérieur (19) de la roue plongeuse (2e).

5. Procédé selon au moins l'une des revendications précédentes, caractérisé en ce que des corps d'accroissance servant de support (20) à des micro-organismes sessiles, se déplacent librement dans l'intérieur (19) de la roue plongeuse (2) et/ou à l'extérieur de la roué plongeuse (2f).

6. Procédé selon au moins l'une des revendications précédentes, caractérisé en ce que, avec l'air ambiant, il est introduit en même temps également du liquide de l'espace (18) recevant la roue plongeuse (2) de telle sorte dans l'intérieur (19) de la roue plongeuse (2e) et y est guidé de façon à former un flux tournant relativement à la roue plongeuse (2).

7. Procédé selon au moins l'une des revendications précédentes, caractérisé par des conditions type pour une nitrification à l'intérieur de la roue plongeuse (2) et pour une dénitrification à l'extérieur de la roue plongeuse (2).

8. Dispositif pour l'épuration biologique des eaux d'égout à l'aide de micro-organismes en suspension et/ou sessiles sous la forme d'une roue plongeuse (2) qui présente une chambre disposée à l'intérieur (19) au milieu avec un arbre (3) ainsi que des chambres de réaction (4) radialement extérieures et axialement les unes à côté des autres et convoie de l'oxygène de l'air environnant dans un mélange agité, constitué de liquide clarifiant et de biomasse, caractérisé en ce que la roue plongeuse (2) présente au côté frontal, au voisinage de son intérieur (19)/chambre intérieure, des pièces de fermeture en forme de plaque (14, 15) aux deux côtés frontaux pour fermer son intérieur (19) et
en ce qu'il est prévu au moins une ouverture (16) et
en ce que des parties (24, 26, 27, 28) servant d'installation de guidage sont prévues de telle manière qu'il s'établit à l'intérieur de la roue plongeuse (2) un flux circulant.

9. Dispositif selon au moins l'une des revendications de dispositif précédentes, caractérisé en ce que des supports (20, 20d, 20f) déplaçables librement pour des micro-organismes sessiles sont disposés à l'intérieur (19) de la roue plongeuse (2) et/ou à l'extérieur de la roue plongeuse (2f).

10. Dispositif selon au moins l'une des revendications de dispositif précédentes, caractérisé en ce que des chambres à puiser (60a) pour l'air environnant et/ou pour du liquide sont prévues de façon qu'elles transmettent leur contenu au moins en partie directement radialement dans l'intérieur (19e) de la roue plongeuse (2e).

11. Dispositif selon au moins l'une des revendications de dispositif précédentes, caractérisé en ce que des fentes (55) orientées radialement sont ménagées entre les chambres de réaction (4) et relient le pourtour de la roue plongeuse (2) à son intérieur (19).

12. Dispositif selon au moins l'une des revendications de dispositif précédentes, caractérisé par des installations pour créer des conditions type de façon à pouvoir effectuer une nitrification à l'intérieur de la roue plongeuse (2) et une dénitrification à l'extérieur de la roue plongeuse (2).

13. Dispositif pour l'épuration biologique des eaux d'égout à l'aide d'une roue plongeuse (2d) qui présente une chambre disposée à l'intérieur (19d) au milieu avec un arbre (3d) et des côtés frontaux fermés pour une grande part, caractérisé en ce que des chambres servant de chambres de réaction (4d) et/ou de chambres à puiser pour l'air environnant/le liquide sont disposées radialement à l'extérieur d'un anneau (53d) en forme de tamis délimitant l'intérieur (19d).
